# FASCICULE DE BREVET EUROPEEN

(11) **EP 2 123 881 B1**
(45) Date de publication et mention de la délivrance du brevet: **09.02.2011**
(21) Numéro de dépôt: 09447020.0
(22) Date de dépôt: 19.05.2009
(51) Int. Cl.: F02B 37/00, F02B 37/007, F02B 37/18, F02B 39/00

(54) **Moteur à combustion interne suralimente par turbo-compresseur**
Verbrennungsmotor mit Aufladung durch Turbolader
Internal combustion engine supercharged by a turbocharger

(30) Priorité: 23.05.2008 BE 200800290
(43) Date de publication de la demande: 25.11.2009
(73) Titulaire: Schmitz, Gerhard, 4780 Saint-Vith (BE)
(72) Inventeur: Schmitz, Gerhard, 4780 Saint-Vith (BE)
(74) Mandataire: Cauchie, Daniel

(56) Documents cités:
- EP-A- 1 426 557
- EP-A- 1 541 826
- WO-A-2008/018577
- DE-A1- 10 061 846
- JP-A- 59 203 823

## Description

L'invention se rapporte d'une manière générale à un moteur à combustion interne à piston.

Plus précisément, l'invention concerne un moteur à combustion interne à piston, du genre comportant au moins un cylindre muni d'une soupape d'échappement en relation avec la turbine d'un turbo-compresseur destiné à récupérer une partie de l'énergie résiduelle contenue dans les gaz comburés et ce, au moyen d'une détente supplémentaire de ceux-ci dans ladite turbine du turbo-compresseur afin d'entraîner le compresseur de ce même turbo-compresseur et d'ainsi suralimenter ledit moteur à combustion interne, la turbine de chaque cylindre qui relâche lesdits gaz comburés étant montée directement sur la culasse dudit moteur en aval de la soupape d'échappement et sans l'intermédiaire d'un collecteur situé entre la culasse et l'entrée de cette turbine, JP 59203823 A

Les perfectionnements les plus récents apportés aux moteurs à combustion interne portent notamment sur une suralimentation obtenue au moyen d'un groupe turbo-compresseur, ci-après également dénommé "turbo", entraîné par l'énergie résiduelle disponible à partir des gaz d'échappement.

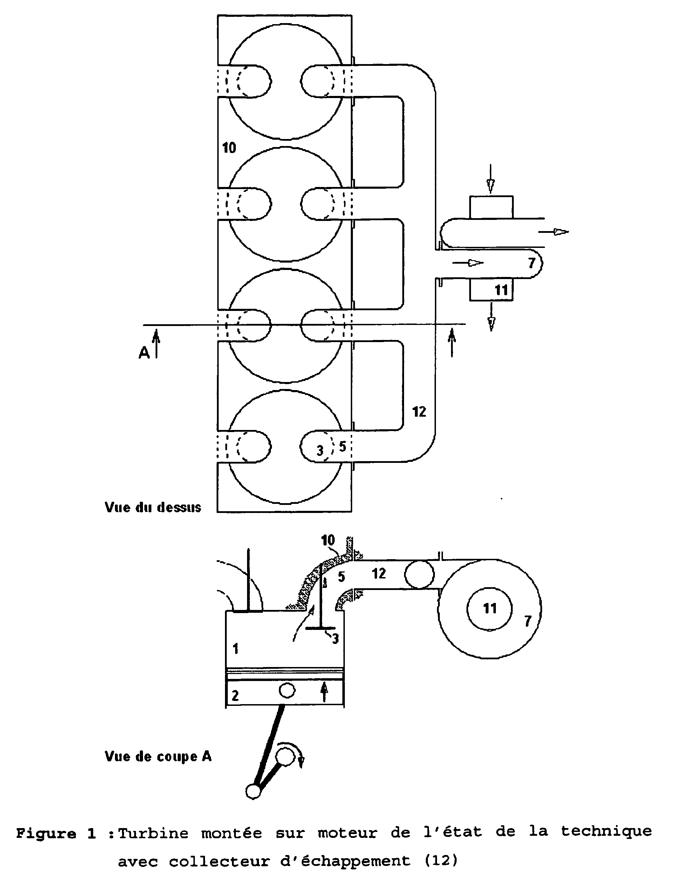

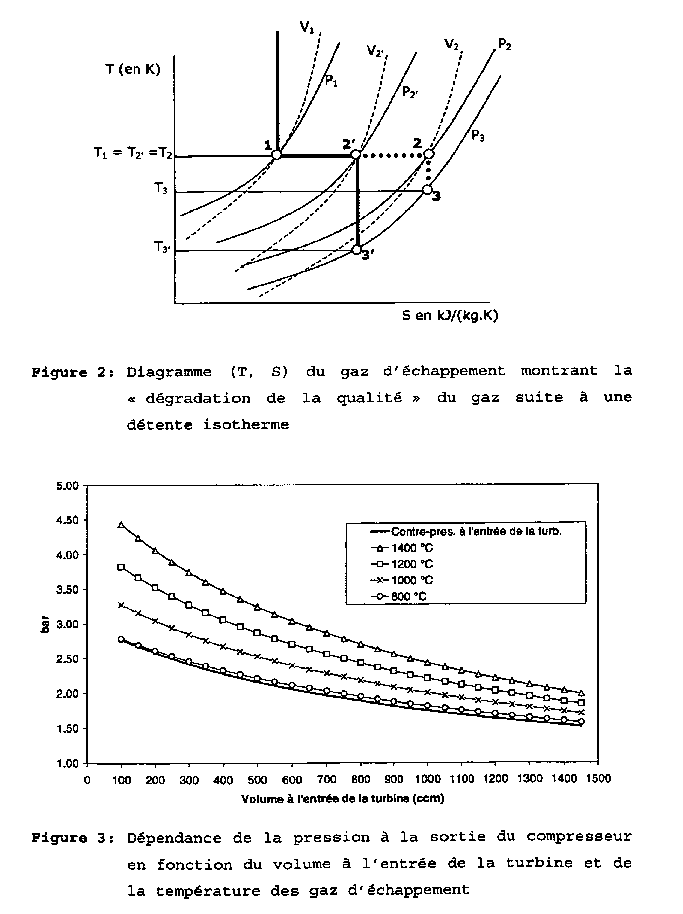

L'évolution de l'état thermodynamique de ces gaz d'échappement quittant, après leur détente, un cylindre d'un moteur, par exemple le cylindre (1) muni de son piston (2) à la Figure 1 en annexe, pour être acheminés vers la turbine (7) d'un turbo, peut être représentée par le diagramme (T,S) à la Figure 2 en annexe, donnant la température du gaz T en fonction de son entropie S. Dans cette Figure 2, les lignes pointillées et indexées par Vᵢ représentent les isochores, càd. les lignes qui relient les états du gaz à même densité tandis que les lignes fines et continues, indexées par Pᵢ sont les isobares, càd. les lignes qui relient les états du gaz se trouvant sous même pression. Selon la thermodynamique, le travail mécanique produit pendant que le gaz évolue d'un état 1 vers un autre état 2 est proportionnel à la différence de température du gaz avant et après cette évolution. L'évolution du gaz d'échappement d'un moteur à combustion interne avec turbo est décrite par la succession des états 1, 2, 3 (voir Figure 2) où l'état 1 est celui du gaz comburé après sa détente dans le cylindre (1) du moteur et juste avant l'ouverture de la soupape d'échappement (3), l'état 2 est l'état du gaz dans le volume formé par la tubulure d'échappement (5) et le collecteur d'échappement (12), qui amène le gaz comburé vers l'entrée de la turbine (7) et l'état 3 est celui du gaz comburé à la sortie de la turbine, où la pression P₃ est normalement proche de la pression ambiante. L'évolution du gaz entre l'état 1 et l'état 2 peut être représentée approximativement par une détente isotherme, càd. un accroissement du volume de V₁ vers V₂, accompagnée d'une chute de pression de P₁ vers P₂ et d'un accroissement important de l'entropie à température constante. Par conséquent, aucun travail utile n'est produit. L'extraction du travail mécanique utile au moyen de la turbine (7) sera réalisée par une détente la plus isentropique possible des gaz comburés de la pression P₂ vers la pression P₃. Plus cette détente est importante, plus la chute de température sera importante, plus la quantité de travail récupérable sera importante. Sachant que P₃ est proche de la pression ambiante, donc donnée, la chute de pression isentropique qui peut être réalisée à l'intérieur de la turbine (7) sera d'autant plus faible que P₂ sera proche de P₃. Au vu de la caractéristique des isobares et isochores, on observe que plus V₂ est grand par rapport à V₁, plus le point 2 se trouve déplacé vers la droite sur le diagramme (T,S) et plus ce point se retrouvera sur une isobare correspondante P₂ proche de celle de P₃. Par conséquent, on constate facilement que les volumes (5 et 12) entre la soupape d'échappement (3) et l'entrée de la turbine (7) doit être le plus petit possible pour maximiser le travail récupérable au moyen d'une détente supplémentaire des gaz comburés dans la turbine. En effet, si l'on parvient à réduire la taille de ce volume (5 et 12) de V₂ à V_{2'}, l'on se rend tout de suite compte que P₂. s'éloigne de plus en plus de P₃, ce qui entraîne une chute de la température due à la détente P_{2'} vers P₃ et, en corollaire une chute plus importante d'enthalpie des gaz comburés à travers la turbine (7). Il se produit ainsi un travail mécanique plus important, travail récupérable et utilisable par un compresseur monté sur le même arbre du turbo. Ainsi, l'on peut dire que la « qualité du gaz comburé » en aval de la soupape d'échappement (3) et en amont de la turbine (7) se dégrade au fur et à mesure que cette chute de pression isotherme entre l'état 1 et 2 (ou 2') augmente, suite à l'augmentation du volume lors du changement d'état de 1 à 2 (ou 2').

La Figure 3 en annexe montre, par ailleurs, la dépendance de la pression à la sortie du compresseur du turbo-compresseur en fonction des volumes (5 et 12) à l'entrée de la turbine et de la température des gaz d'échappement, les autres paramètres, comme la pression dans le cylindre au moment de l'ouverture de la soupape d'échappement (3) restant inchangés. Selon le graphique y représenté, plus ces volumes (5 et 12) à l'entrée de la turbine sont importants, plus cette pression à la sortie du compresseur est faible quelle que soit la température des gaz d'échappement et, par conséquent, plus faible sera le travail utile recueilli. Une récupération maximale de l'énergie résiduelle des gaz d'échappement d'un moteur à combustion interne en vue d'augmenter le travail du compresseur du turbo reste donc d'un intérêt incontestable.

Une amélioration peut être apportée à un moteur à combustion interne à piston en optimisant, par l'intermédiaire du turbo-compresseur, la récupération de l'énergie résiduelle contenue dans les gaz d'échappement de ce moteur. A cet effet, la turbine de chaque cylindre relâchant lesdits gaz comburés est montée directement sur la culasse dudit moteur en aval de la soupape d'échappement et sans l'intermédiaire d'un collecteur d'échappement situé entre ladite culasse et l'entrée de la turbine.

Ainsi, une première optimisation de la récupération de l'énergie résiduelle des gaz d'échappement d'un moteur à combustion interne au moyen d'un turbo, consiste à fixer une turbine par cylindre, directement sur la culasse du moteur et sans l'intermédiaire d'un collecteur d'échappement, tel que (12) à la Figure 1, situé entre la culasse et l'entrée de la turbine. Bien qu'elle puisse être envisagée pour tous moteurs à combustion interne, cette configuration sera particulièrement indiquée pour le moteur à deux temps, ou encore pour le cylindre basse pression d'un moteur à cinq ou à quatre temps et demi où l'échappement est réalisé par un cylindre travaillant selon un cycle deux temps, càd. caractérisé par un échappement de gaz comburés par tour de vilebrequin.

Une deuxième optimisation de la récupération de l'énergie résiduelle des gaz d'échappement d'un moteur à combustion interne au moyen d'un turbo consiste en une amélioration du réglage des charges partielles.

Généralement, l'énergie résiduelle des gaz d'échappement récupérable s'avère plus grande que celle nécessaire au compresseur du turbo pour effectuer la compression d'une même quantité d'air frais. Afin d'éviter que le turbo ne « s'emballe », càd. que sa vitesse de rotation ne devienne trop grande, les moteurs turbo classiques sont équipés d'une soupape de décharge aménagée entre la soupape d'échappement, c'est-à-dire (3) à la Figure (1), et l'entrée de la turbine. Quand cette soupape est fermée, la totalité des gaz d'échappement passe à travers la turbine. Ce passage est très utile pour accélérer celle-ci mais peut engendrer le risque d'un "emballement" du turbo. Dès qu'il y a risque d'emballement, la soupape de décharge s'ouvre par un mécanisme soit contrôlé par la pression fournie par le compresseur, soit par une commande électronique. Il faut noter que cette commande est plutôt statique, càd. qu'elle ne suit pas le rythme des cycles moteurs engendrés à l'intérieur du moteur, comme par exemple dans le cas des soupapes d'admission et d'échappement qui sont commandées par des cames tournant à la vitesse d'exécution des cycles moteurs. Une fois la soupape ouverte, la pression chute à l'entrée de la turbine, cette chute étant provoquée par une partie des gaz d'échappement qui s'échappe par la soupape de décharge sans traverser la turbine. Néanmoins il subsiste, voire doit subsister, une pression à l'entrée de la turbine, pression supérieure à celle qui règne à la sortie de celle-ci, la dernière pression étant proche de la pression ambiante. Cette pression à l'entrée de la turbine, aussi appelée contre-pression de turbine, se répercute à l'intérieur du cylindre du moteur de sorte que, plus cette pression est élevée, plus le piston doit « travailler » contre celle-ci lors de sa montée vers le point mort haut (PMH). On retiendra que la soupape de décharge classique agit sur la contre-pression d'une manière indifférente et non dynamique: elle doit réduire la pression à l'entrée de la turbine pour en réduire la puissance fournie au compresseur mais elle doit en même temps maintenir une puissance suffisante pour que le turbo puisse fournir de l'air pré-comprimé afin d'assurer la charge demandée du moteur.

Toutefois, l'inconvénient de ce mode opératoire quasi-statique est de conduire à une contre-pression également quasi-constante: d'une part cette pression est plus faible que la pression régnant dans le cylindre en fin de détente, ce qui engendre par conséquent un rendement de la turbine inférieur à un rendement qu'il serait possible d'obtenir si l'on utilisait cette dernière pression disponible à l'intérieur du cylindre du moteur, d'autre part cette pression sera maintenue dans le cylindre même pendant la course ascendante du piston du cylindre vers son PMH, ce qui augmente le travail à fournir par ce piston pendant cette course. On peut affirmer que le réglage de la puissance de la turbine au moyen d'une soupape de décharge classique est inévitablement accompagné d'une « dégradation supplémentaire de la qualité » du gaz d'échappement disponible à l'entrée de la turbine au cours de sa détente isotherme subie lors de l'ouverture de la soupape d'échappement pendant laquelle sa pression chute jusqu'au niveau de la contre-pression, cette dernière étant contrôlée par ladite soupape de décharge classique.

Un autre inconvénient d'une soupape de décharge classique, insérée entre la soupape d'échappement (3) du moteur, à la Figure (1) et l'entrée de la turbine (7) se situe au niveau du volume nécessité par cette insertion sachant qu'une réduction importante de ce volume entre la soupape d'échappement et l'entrée de la turbine est souhaitable, comme on vient de le montrer ci-dessus.

La présente invention a pour but de proposer un moteur à combustion interne dépourvu de ces deux inconvénients.

Pour atteindre ce but, l'invention prévoit au moins une soupape d'échappement supplémentaire, également dénommée "soupape de décharge dynamique", aménagée dans la culasse du cylindre et configurée en sorte que les gaz qui s'échappent par cette soupape sont envoyés directement vers un système d'échappement sans passer au préalable à travers la turbine dudit turbo-compresseur et en sorte que l'ouverture de ladite soupape supplémentaire est commandée de manière à s'ouvrir au cours de chaque cycle d'échappement réalisé dans ledit cylindre au plus tôt sensiblement après l'ouverture de la soupape d'échappement (3) à l'entrée de la turbine et à se fermer au plus tard lorsque le piston dudit cylindre vient de passer par son point mort haut après avoir réalisé la course d'échappement.

Ainsi, selon l'invention, au moins deux soupapes d'échappement sont aménagées dans le cylindre: au moins une soupape sert à faire la connexion entre le cylindre et l'entrée de la turbine et au moins une autre soupape sert à faire la connexion entre le cylindre et le système d'échappement, sans que les gaz y passant ne traversent la turbine. Cette deuxième soupape d'échappement sera dénommée par la suite « soupape de décharge dynamique », le terme « dynamique » faisant référence au fait, que cette soupape de décharge, par opposition à la soupape de décharge classique, s'ouvre au rythme des cycles thermiques réalisés dans le moteur, comme c'est le cas pour les soupapes d'admission et d'échappement ordinaires. Cette soupape de décharge dynamique doit s'ouvrir au plus tôt, de l'ordre de 30 à 60 degrés du vilebrequin après l'ouverture de la première soupape d'échappement, ci-après dénommée « soupape d'échappement turbine ».

La soupape de décharge dynamique assure l'alimentation de la turbine par des gaz comburés sous une pression la plus élevée possible pendant que le piston du cylindre se trouve aux alentours de son point mort bas (PMB). A cet instant la cinématique bielle/manivelle reliant ce piston au vilebrequin conduit à la vitesse minimale de ce piston qui, pendant un certain temps, ne produira, par conséquent, qu'une variation de volume minimale dans le cylindre. Ceci provoque moins de nuisances au niveau du travail échangé entre le piston et le vilebrequin en raison de la présence d'une contre-pression due à la turbine. Une fois la turbine alimentée par du gaz comburé de « meilleure qualité » possible, la soupape de décharge dynamique, selon l'invention, tend à minimiser la pression résiduelle dans le cylindre lors de la course ascendante du piston vers son point mort haut.

Pour régler la charge du turbo, il s'avère maintenant nécessaire de pouvoir commander la quantité de gaz comburés qui s'échappe à travers la soupape de décharge dynamique et qui, par conséquent, ne sera pas disponible à la turbine. Cette opération peut être réalisée selon l'une des trois manières suivantes:
➢ Utilisation **d'une commande variable et continue de la soupape de décharge dynamique** de manière à augmenter la durée et l'amplitude de l'ouverture au fur et à mesure de la réduction de la performance nécessaire de la turbine.
➢ Utilisation d'un **étranglement variable en aval de la soupape de décharge dynamique** qui s'ouvrira au fur et à mesure de la réduction de la performance nécessaire de la turbine.
➢ Utilisation d'une **commande variable discontinue de la soupape de décharge dynamique** de manière à sélectionner une loi de levée parmi au moins deux lois de levée différentes pour commander ladite soupape afin de régler d'une manière grossière le débit en question et utilisation supplémentaire d'un **étranglement variable en aval de la soupape de décharge dynamique,** afin de régler d'une manière plus fine le débit à travers la soupape de décharge dynamique. La commande variable discontinue la plus simple consistera en un mécanisme qui active ou désactive la levée de la soupape en question.

Ainsi, selon une autre de ses caractéristiques, l'invention prévoit une soupape d'étranglement à fermeture variable et susceptible d'être commandée, cette soupape étant aménagée dans une tubulure d'échappement approvisionnée par les gaz comburés traversant la soupape de décharge dynamique et configurée en sorte que la quantité de gaz comburés qui s'échappent de ladite tubulure d'échappement et qui ne sont plus disponibles pour la turbine est directement proportionnelle à l'ouverture de cette soupape d'étranglement réduisant ainsi la puissance de ladite turbine.

De même, selon une autre de ses caractéristiques, l'invention prévoit une commande qui permet de régler de manière variable et continue, l'ouverture de la soupape de décharge dynamique de sorte que la durée et la levée maximale de l'ouverture de cette soupape de décharge dynamique peuvent être ajustées pour faire échapper une seconde portion déterminée des gaz comburés en sorte que la première portion des gaz comburés, qui elle est dirigée vers la turbine à travers la soupape d'échappement turbine, se trouve adaptée à la puissance nécessaire de la turbine.

D'autre part, la présente invention envisage également une commande variable, continue ou même discontinue, de la soupape d'échappement turbine, afin de réduire le recouvrement des ouvertures de cette soupape d'échappement turbine et de la soupape de décharge dynamique, lors du fonctionnement à charge partielle, pour éviter autant que possible qu'une partie des gaz d'échappement ayant quitté le cylindre à travers la soupape d'échappement turbine ne retourne vers le cylindre pour ensuite s'échapper à travers l'autre soupape d'échappement, càd. la soupape de décharge dynamique.

Ainsi, selon une caractéristique supplémentaire, l'invention prévoit une commande qui permet de régler, de manière variable, l'ouverture de la soupape d'échappement turbine, en sorte que le recouvrement de l'ouverture de cette soupape d'échappement turbine avec l'ouverture de la soupape de décharge dynamique se trouve réduit au maximum.

On notera que le réglage de la puissance du turbo, donc aussi le réglage de la puissance du moteur selon la présente invention, se distingue fondamentalement de l'objet du brevet EP n° 1 201 892 B1 (Gerhard SCHMITZ) intitulé « Moteur à combustion interne à cinq temps ». En effet, on constate dans le moteur selon l'invention, l'absence du clapet de déviation ainsi que des tubulures y afférentes lesquelles sont présentes dans le dispositif, objet du susdit brevet. Ceux-ci ne permettent que la sélection de deux états de fonctionnement fondamentaux et nécessitent l'addition d'une soupape de décharge classique entre la soupape d'échappement et l'entrée de la turbine.

L'invention, objet de la présente demande, permet d'une part de minimiser la taille du volume situé entre la soupape d'échappement et l'entrée de la turbine et d'autre part le réglage continu de la charge du moteur au moyen soit, d'une commande variable de la soupape de décharge dynamique, soit de la commande variable de la soupape d'étranglement ou encore d'une combinaison de ces deux moyens.

L'invention sera mieux comprise et d'autres buts, caractéristiques et avantages de celle-ci apparaîtront plus clairement au cours de la description qui va suivre faite en référence aux dessins schématiques donnés uniquement à titre d'exemples illustrant des modes de réalisation de l'invention et dans lesquels:
- la figure 4 est une coupe latérale d'un moteur à combustion interne à piston selon l'invention, avec turbine montée sur culasse, soupape de décharge dynamique et soupape d'étranglement à l'échappement,
- la figure 5 est une vue en plan du moteur à la figure 4,
- la figure 6 est une vue en plan d'un moteur selon l'invention, avec turbine montée sur culasse et deux soupapes d'échappement montées du même côté,
- la figure 7 est un graphique de la commande statique des soupapes d'échappement,
- la figure 8 est un graphique de commande statique pour la soupape d'échappement turbine et commande variable pour la commande de décharge dynamique (pleine charge),
- la figure 9 est un graphique de commande statique pour la soupape d'échappement turbine et commande variable pour la soupape de décharge dynamique (charge moyenne)
- la figure 10 est un graphique de commande statique pour la soupape d'échappement turbine et commande variable pour la soupape de décharge dynamique (charge faible),
- la figure 11 est un graphique de la commande variable pour les deux soupapes d'échappement (pleine charge),
- la figure 12 est un graphique de la commande variable pour les deux soupapes d'échappement (charge moyenne),
- la figure 13 est un graphique de la commande variable pour les deux soupapes d'échappement (faible charge).

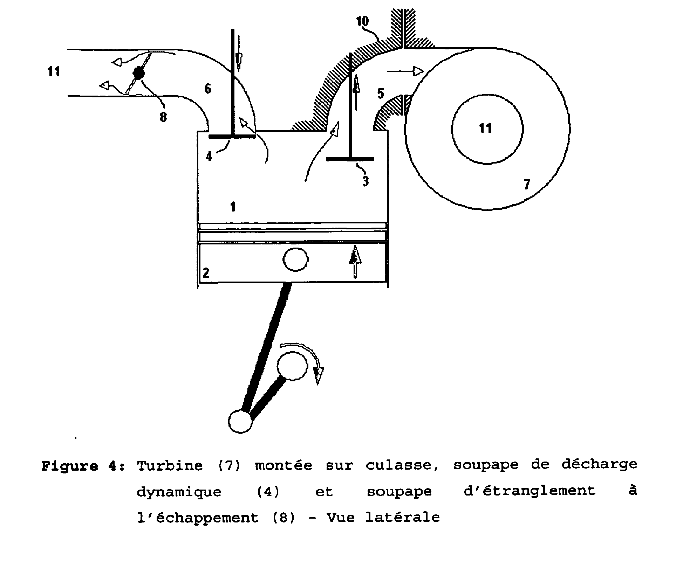

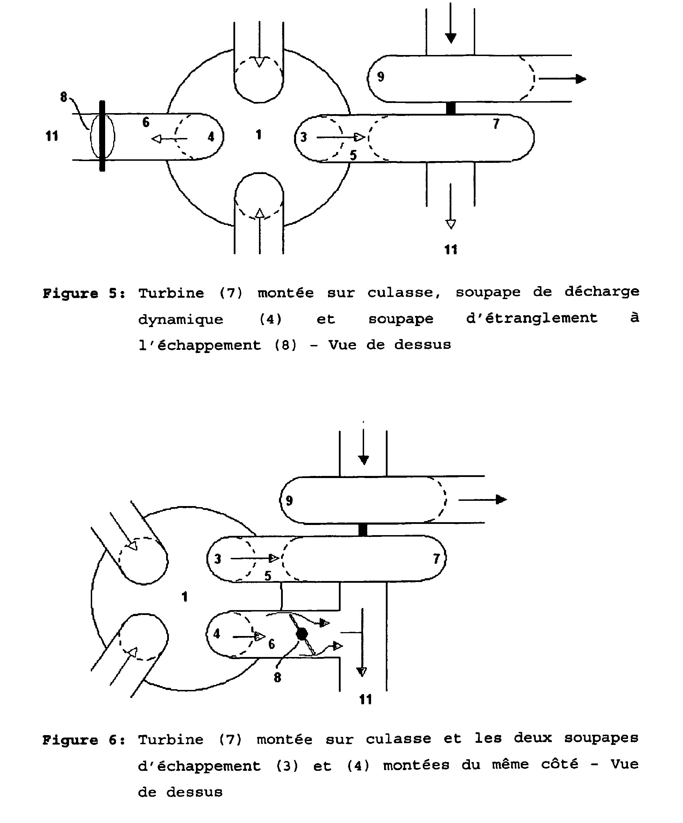

Tel que représenté aux Figures 4 à 6, le moteur à combustion interne selon l'invention comprend un cylindre (1) dans lequel se déplace un piston (2). Sur la culasse (10) est montée, en aval d'une tubulure d'échappement (5), une turbine (7) reliée à un compresseur (9) en relation avec un système d'échappement (11). En outre, deux soupapes d'échappement sont aménagées dans ce cylindre (1), l'une (3) ou "soupape d'échappement turbine" apte à servir de connexion avec l'entrée de la turbine (7), l'autre (4) ou "soupape d'échappement dynamique" avec le système d'échappement (11). Par ailleurs, la tubulure d'échappement (6) est munie d'une soupape d'étranglement (8) en aval de la soupape d'échappement dynamique (4). Ces deux soupapes (3) et (4) peuvent être montées sensiblement diamétralement opposées (Figure 5) ou, de préférence, dans une même portion cylindrique de 180°, par exemple à proximité immédiate l'une de l'autre (Figure 6).

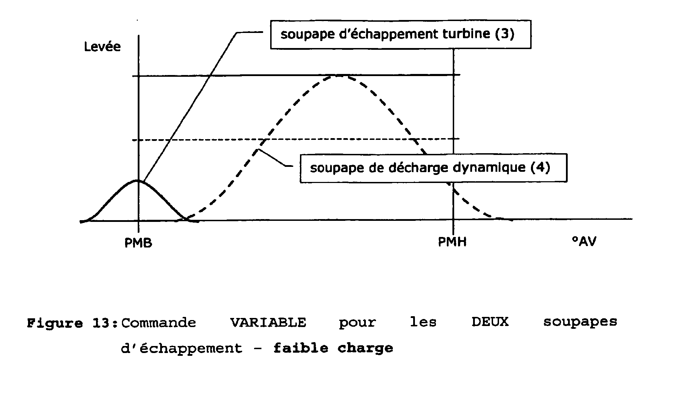

Les trois modes de fonctionnement du réglage de la puissance du turbo, objet de la présente invention, seront décrits plus en détails, par la suite, en se référant aux Figures 3 à 13 en annexe :

### 1. Fonctionnement avec commande STATIQUE des soupapes d'échappement (3), (4), et AVEC soupape d'étranglement à l'échappement (8)

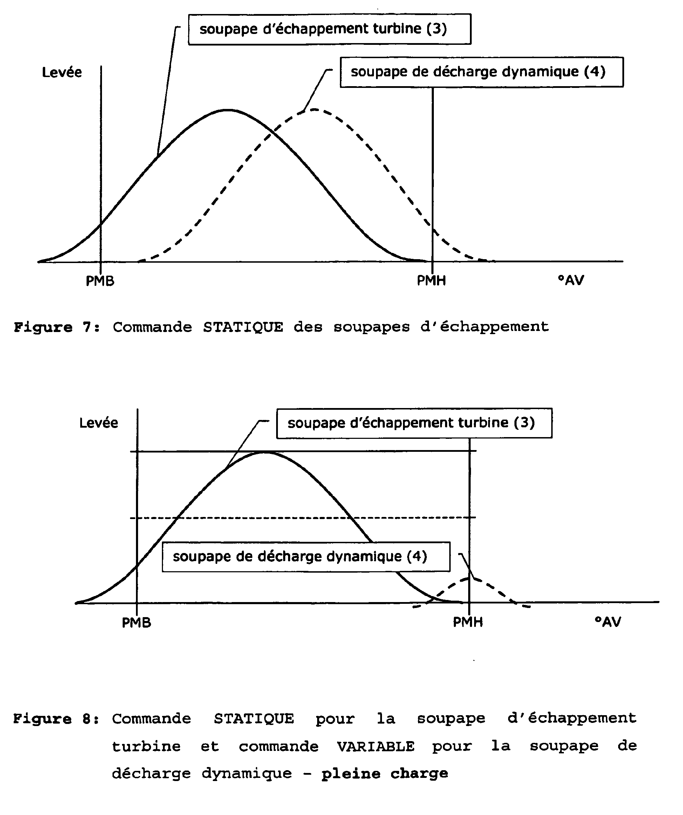

Ce mode de fonctionnement, représenté aux Figures 4 et 7, montre que peu avant l'arrivée du piston (2) du moteur à combustion interne en son point mort bas (PMB), la soupape d'échappement turbine (3) s'ouvre. Les gaz comburés, qui se trouvent sous une pression résiduelle, s'échappent alors partiellement à travers ladite soupape (3) et à travers la tubulure d'échappement (5) aménagée dans la culasse (10) vers l'entrée de la turbine (7). Celle-ci est montée directement sur cette même culasse (10) et ne reçoit des gaz comburés qu'en provenance d'un seul cylindre (1).

Lors d'une position ultérieure du vilebrequin, de l'ordre de 30 à 60°AV (angles vilebrequin), la soupape de décharge dynamique (4) s'ouvre, la soupape d'échappement turbine (3) restant ouverte. Dès cet instant, une partie des gaz comburés contenus dans le cylindre (1) va s'échapper à travers ladite soupape (4) et s'accumuler dans la tubulure d'échappement (6) aménagée dans la culasse, en amont de la soupape d'étranglement (8), elle-même aménagée dans cette tubulure (6) le plus près possible de la soupape de décharge dynamique (4). La quantité de gaz comburés s'échappant par la soupape de décharge dynamique (4) sera fonction de l'ouverture de la soupape d'étranglement (8) laquelle sera commandée mécaniquement ou électroniquement d'une manière continue. A pleine charge, cette soupape sera complètement fermée et à charge minimale complètement ouverte.

La commande des soupapes d'échappement (3) et (4) se fera, comme pour une soupape d'échappement classique, au moyen d'une came. Les deux soupapes se fermeront quand le piston (2) se trouve proche de son PMH (point mort haut).

### 2. Fonctionnement avec commande STATIQUE de la soupape d'échappement turbine (3) et avec commande VARIABLE CONTINUE de la soupape de décharge dynamique (4), SANS soupape d'étranglement à l'échappement (8).

Dans ce mode de fonctionnement, illustré aux Figures 8 à 10, la soupape d'échappement turbine (3) est commandée de la même manière que dans le mode de fonctionnement à commande de soupape statique pour les deux soupapes d'échappement (3) et (4), décrit ci-dessus.

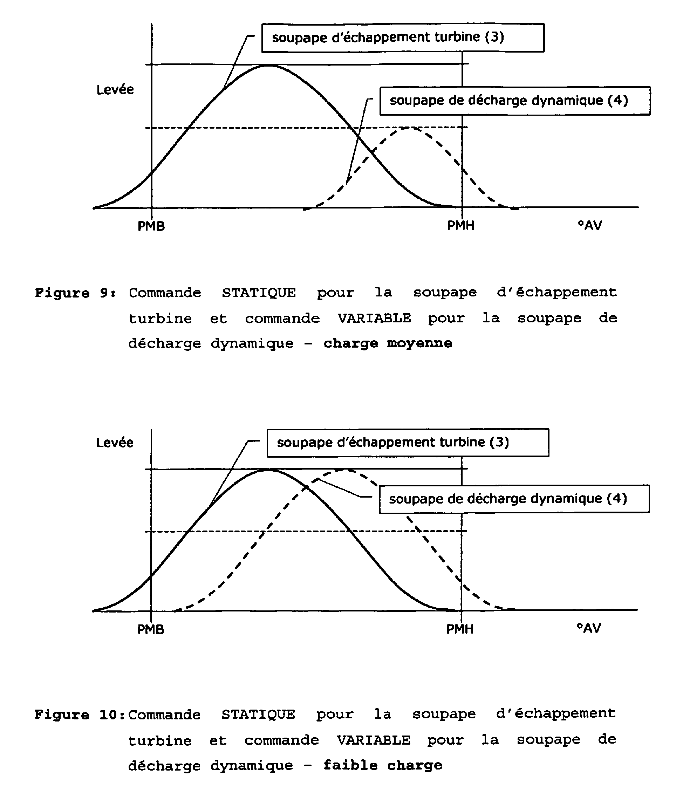

En ce qui concerne la soupape de décharge dynamique (4), celle-ci sera commandée d'une manière variable et continue, de sorte qu'à pleine charge, cette soupape ne s'ouvre absolument pas ou alors uniquement durant le parcours de quelques degrés d'angle du vilebrequin aux alentours du PMH du piston (2) et avec une levée maximale très réduite (voir Figure 8). Au fur et à mesure de la nécessité de réduire la puissance de la turbine (7), la durée d'ouverture de la soupape de décharge dynamique (4) sera prolongée en avançant le point d'ouverture en direction du PMB, en maintenant l'instant de fermeture aux alentours du PMH du piston (2) et en augmentant en même temps la levée maximale (voir Figure 9 et Figure 10). Il apparaît alors que la soupape d'étranglement (8) n'est plus nécessaire et peut être omise.

### 3. Fonctionnement avec commande STATIQUE de la soupape d'échappement turbine (3) et avec commandée VARIABLE DISCONTINUE de la soupape de décharge dynamique (4), AVEC soupape d'étranglement à l'échappement (8).

Dans ce mode de fonctionnement, illustré également aux Figures 8 à 10, la soupape d'échappement turbine (3) est commandée de la même manière que décrit au paragraphe 2. ci-dessus.

En ce qui concerne la soupape de décharge dynamique (4), celle-ci sera commandée d'une manière variable discontinue, de sorte qu'à pleine charge, cette soupape ne s'ouvre absolument pas ou alors uniquement durant le parcours de quelques degrés d'angle du vilebrequin aux alentours du PMH du piston (2) et avec une levée maximale très réduite. Au fur et à mesure de la nécessité de réduire la puissance de la turbine (7), on sélectionnera une loi de levée à durée d'ouverture prolongée en avançant le point d'ouverture en direction du PMB, en maintenant l'instant de fermeture aux alentours du PMH du piston (2) et en augmentant en même temps la levée maximale. Le réglage plus fin du débit à travers la soupape de décharge dynamique (4) sera réalisé au moyen de la soupape d'étranglement (8).

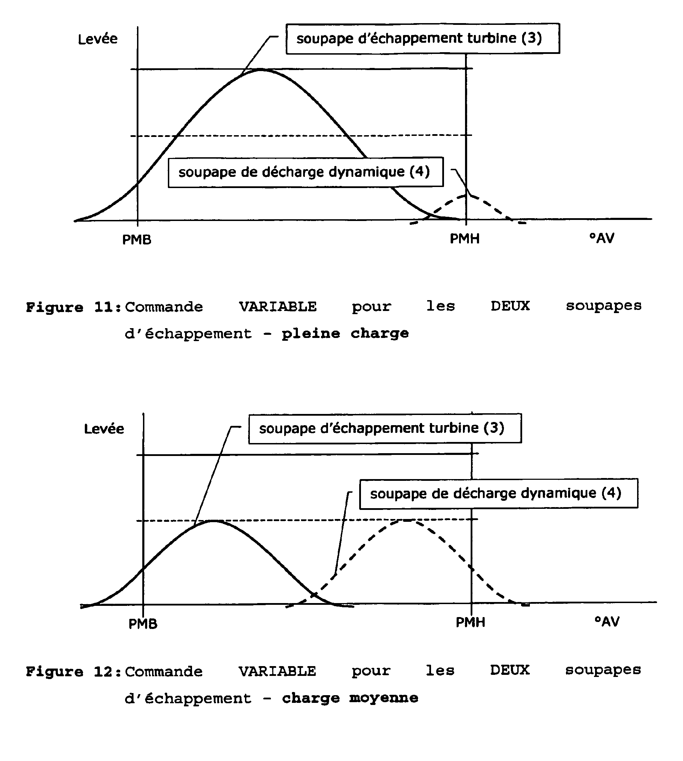

Chacun des modes de fonctionnement décrits ci-dessus peut être combiné avec une commande VARIABLE continue ou discontinue de la soupape d'échappement turbine (3), (voir Figure 11 à Figure 13). Dans ce cas la soupape d'échappement turbine (3) sera, elle aussi, commandée d'une manière variable, de sorte qu'à faible charge, elle ne s'ouvre absolument pas ou alors uniquement durant le parcours de quelques degrés d'angle du vilebrequin aux alentours du PMB du piston (2) et avec une levée maximale très réduite. Au fur et à mesure de la nécessité d'augmenter la puissance de la turbine (7), la durée d'ouverture de la soupape d'échappement turbine (3) sera prolongée en reculant le point de fermeture en direction du PMH, en maintenant l'instant d'ouverture aux alentours du PMB du piston (2) et en augmentant en même temps la levée maximale. Ceci pourra être réalisé d'une manière soit continue soit discontinue.

## Revendications

1. Moteur à combustion interne à piston, du genre comportant au moins un cylindre muni d'une soupape d'échappement (3) en relation avec la turbine (7) d'un turbo-compresseur destiné à récupérer une partie de l'énergie résiduelle contenue dans les gaz comburés et ce, au moyen d'une détente supplémentaire de ceux-ci dans ladite turbine du turbo-compresseur afin d'entraîner le compresseur de ce même turbo-compresseur et d'ainsi suralimenter ledit moteur à combustion interne, la turbine (7) de chaque cylindre (1) qui relâche lesdits gaz comburés étant montée directement sur la culasse (10) dudit moteur en aval de la soupape d'échappement (3) et sans l'intermédiaire d'un collecteur (12) situé entre la culasse (10) et l'entrée de cette turbine (7), **caractérisé en ce qu'**au moins une soupape d'échappement supplémentaire (4) ou soupape de décharge dynamique est aménagée dans la culasse (10) du cylindre (1) et configurée en sorte que les gaz qui s'échappent par cette soupape de décharge dynamique sont envoyés directement vers un système d'échappement (11) sans d'abord passer à travers la turbine (7) dudit turbo-compresseur et en sorte que l'ouverture de ladite soupape de décharge dynamique est commandée de manière à s'ouvrir au cours de chaque cycle d'échappement réalisé dans ledit cylindre au plus tôt sensiblement après l'ouverture de la soupape d'échappement turbine (3) et à se fermer au plus tard lorsque le piston (2) dudit cylindre vient de passer par son point mort haut après avoir réalisé la course d'échappement.

2. Moteur à combustion interne selon la revendication 1, **caractérisé en ce qu'**une soupape d'étranglement (8), à fermeture variable et susceptible d'être commandée, est aménagée dans une tubulure d'échappement (6) approvisionnée par les gaz comburés traversant la soupape de décharge dynamique (4), cette soupape d'échappement étant configurée en sorte que la quantité de gaz comburés qui s'échappent de ladite tubulure d'échappement et qui ne sont plus disponibles pour la turbine est directement proportionnelle à l'ouverture de cette soupape d'étranglement réduisant ainsi la puissance de ladite turbine.

3. Moteur à combustion interne selon la revendication 1, **caractérisé en ce qu'**une commande permet de régler de manière variable et continue, l'ouverture de la soupape de décharge dynamique (4) de sorte que la durée et la levée maximale de l'ouverture de cette soupape de décharge dynamique peuvent être ajustées pour faire échapper une seconde portion déterminée des gaz comburés en sorte que la première portion des gaz comburés, qui elle est dirigée vers la turbine (7) à travers la soupape d'échappement turbine (3), se trouve adaptée à la puissance nécessaire de la turbine (7).

4. Moteur à combustion interne selon une des revendications 1 à 3, **caractérisé en ce qu'**une commande permet de régler, de manière variable, l'ouverture de la soupape d'échappement turbine (3), en sorte que le recouvrement de l'ouverture de cette soupape d'échappement turbine avec l'ouverture de la soupape de décharge dynamique (4) se trouve réduit au maximum.

## Claims

1. An internal combustion engine with piston, of the type having at least one cylinder provided with an exhaust valve (3) in relation with the turbine (7) of a turbo-charger for recovering part of waste heat contained in the combusted gases through a further extension thereof in said turbine of the turbo-charger in order to drive the compressor of said turbo-charger and thus to supercharge said internal combustion engine, the turbine (7) of each cylinder (1) which releases said combusted gases being directly mounted on the cylinder head (10) of said engine downstream of the exhaust valve (3) and without intervention of a manifold (12) located between the cylinder head (10) and the inlet of this turbine (7), **characterised in that** at least one further exhaust valve (4) or dynamic relief valve is provided in the cylinder head (10) of the cylinder (1) and configured so that the gases exhausted from this dynamic relief valve are directly sent to an exhaust system (11) without first passing through the turbine (7) of said turbo-charger and so that the opening of said dynamic relief valve is controlled so as to open during each exhaust cycle carried out in said cylinder at the earliest substantially after the opening of the exhaust valve (3) of the turbine and to close at the latest when the piston (2) of said cylinder has just passed through its top dead centre after carrying out the exhaust stroke.

2. The internal combustion engine according to claim 1, **characterised in that** a variable closing, controllable throttle valve (8) is provided in an exhaust manifold (6) fed by the combusted gases going through the dynamic relief valve (4), such exhaust valve being configured so that the amount of combusted gases which are exhausted from said exhaust manifold and which are no longer available for the turbine is directly proportional to the opening of this throttle valve, thus reducing the power of said turbine.

3. The internal combustion engine according to claim 1, **characterised in that** a control enables to adjust, in a variable and continuous manner, the opening of the dynamic relief valve (4) so that the duration and the maximum lift of the opening of this dynamic relief valve can be adjusted to exhaust a second determined portion of the combusted gases so that the first portion of the exhausted gases, which is directed towards the turbine (7) through the exhaust valve (3) of the turbine, is suitable for the required power of the turbine (7).

4. The internal combustion engine according to any of claims 1 to 3, **characterised in that** a control enables to adjust, in a variable manner, the opening of the exhaust valve (3) of the turbine, so that recovery from the opening of this exhaust valve of the turbine with opening of the dynamic relief valve (4) is maximally reduced.

## Patentansprüche

1. Kolbenverbrennungsmotor, der mindestens einen Zylinder mit einem Auslassventil (3) umfasst, das in Verbindung mit einer Turbine (7) eines Abgasturboladers steht, der dazu bestimmt ist, einen Teil der in den Verbrennungsgasen enthaltenen Energie zurückzugewinnen dank einer zusätzlichen Expansion Letzterer in besagter Turbine des Abgasturboladers und somit den besagten Verbrennungsmotor aufzuladen, wobei die Turbine (7) von jedem Zylinder (1), der die besagten Verbrennungsgase ausschiebt, direkt auf den Zylinderkopf (10) des besagten Motors stromabwärts vom Auslassventil (3) montiert ist und ohne dass sich ein Krümmer (12) zwischen dem Zylinderkopf (10) und dem Eingang dieser Turbine (7) befindet, der **dadurch gekennzeichnet ist, dass** mindestens ein zusätzliches Auslassventil (4) oder dynamisches Entlastungsventil im Zylinderkopf (10) des Zylinders (1) vorgesehen und derart konfiguriert ist, dass die Gase, die den Zylinder durch dieses dynamische Entlastungsventil verlassen, direkt zu einem Abgassystem (11) geleitet werden, ohne vorher die Turbine (7) des besagten Abgasturboladers zu passieren und so dass die Öffnung des besagten dynamischen Entlastungsventils derart gesteuert ist, dass es sich im Verlauf von jedem im besagten Zylinder ausgeführten Auslasszyklus spürbar später als das mit der Turbine in Verbindung stehende Auslassventil (3) öffnet und dass es sich spätestens dann schließt, nachdem der Kolben (2) des besagten Zylinders den oberen Totpunkt im Anschluss an den Auslasstakt passiert hat.

2. Verbrennungsmotor gemäß Anspruch 1, der **dadurch gekennzeichnet ist, dass** im Auslasskanal (6), durch den die aus dem dynamischen Entlastungsventil (4) austretenden Verbrennungsgase strömen, ein Drosselventil (8) mit variablen Schließzeiten vorgesehen ist und das gesteuert werden kann, so dass die Menge an Verbrennungsgasen, die durch besagten Auslasskanal treten und die nicht mehr für besagte Turbine zur Verfügung stehen, direkt proportional zur Öffnung dieses Drosselventils ist, wodurch dann die Leistung besagter Turbine gesenkt werden kann.

3. Verbrennungsmotor gemäß Anspruch 1, der **dadurch gekennzeichnet ist, dass** eine Steuerung die Öffnung des dynamischen Entlastungsventils (4) auf variable Art und Welse regelt, so dass die Öffnungsdauer und der maximale Hub dieses dynamischen Entlastungsventils so angepasst werden können, dass eine zweite bestimmte Teilmenge der Verbrennungsgase aus dem Zylinder austreten kann, so dass die erste Teilmenge der Verbrennungsgase, die zur Turbine (7) durch das mit der Turbine In Verbindung stehende Auslassventil (3) geleitet wird, an die erforderliche Leistung der Turbine (7) angepasst wird.

4. Verbrennungsmotor gemäß einer der Ansprüche 1 bis 3, der **dadurch gekennzeichnet Ist, dass** die Öffnung des mit der Turbine verbundenen Auslassventils (3) auf variable Art und Welse gesteuert wird, so dass die Überschneidung der Öffnung dieses, mit der Turbine verbundenen Ventils mit derjenigen des dynamischen Entlastungsventils (4) möglichst reduziert wird.
